# EUROPEAN PATENT SPECIFICATION

(11) **EP 1 541 392 B1**
(45) Date of publication and mention of the grant of the patent: **24.03.2010**
(21) Application number: 04106413.0
(22) Date of filing: 09.12.2004
(51) Int. Cl.: B60G 17/02, B60G 11/04, F16F 1/20, F16F 3/02

(54) **Variable stiffness mechanical leaf spring suspension and a method for adjusting such stiffness**
Aufhängung mit einer mechanischen Blattfeder, die eine veränderliche Steifigkeit hat, und Verfahren zum Einstellen einer solchen Steifigkeit
Suspension avec un ressort mécanique à lame de raideur variable et procédé de réglage d'une telle raideur

(30) Priority: 10.12.2003 IT MI20032410
(43) Date of publication of application: 15.06.2005
(73) Proprietor: IVECO S.p.A., 10156 Torino (IT)
(72) Inventor: Stecco, Maurizio, 10032 Brandizzo (IT)
(74) Representative: Gervasi, Gemma

(56) References cited:
- WO-A-97/36118
- FR-A- 2 620 659
- GB-A- 2 185 088
- US-A- 915 227
- US-A- 1 534 533
- US-A- 1 872 822
- US-A- 4 175 772
- US-A- 4 433 833
- US-A1- 2003 111 813
- PATENT ABSTRACTS OF JAPAN vol. 0102, no. 53 (M-512), 29 August 1986 (1986-08-29) & JP 61 081812 A (HORIKIRI BANE SEISAKUSHO:KK), 25 April 1986 (1986-04-25)
- PATENT ABSTRACTS OF JAPAN vol. 0081, no. 66 (M-314), 2 August 1984 (1984-08-02) & JP 59 063209 A (HINO JIDOSHA KOGYO KK), 10 April 1984 (1984-04-10)
- PATENT ABSTRACTS OF JAPAN vol. 0060, no. 23 (M-111), 10 February 1982 (1982-02-10) & JP 56 141433 A (NHK SPRING CO LTD), 5 November 1981 (1981-11-05)

## Description

This invention relates to a variable stiffness mechanical leaf spring suspension and a method for adjusting such stiffness.

Conventional two-stage leaf springs consist of a main leaf, with a given spring rate, that is hinged at the two ends to the vehicle frame, and a counter leaf that is attached to the main leaf at the mid-point and is free at the ends, which are fitted with pads. When the main leaf bends in excess of a given value, which corresponds to a specific increase in the load and pressure applied to the leaf spring, the pads at the ends of the counter leaf come into contact with the main leaf, thus increasing the overall stiffness of the leaf spring and generating a second spring rate.

Examples of conventional leaf spring suspension are shown in patents US 4433833 and US 1534533 and in patent application WO 97/36118.

In particular US 4433833 discloses a variable rate mechanical leaf spring suspension having two clamping means provided for clamping the main leaf and the counter leaf in the direction of their thickness and to permit a sliding movement of the main leaf with respect to the counter leaf. The clamping means comprise a press member for pressing the main leaf against the counter leaf in order to vary the stiffness.

US 1534533 discloses a spring suspension for vehicles comprising a top leaf substantially straight and a lower leaf curved. These leafs are mutually connected in correspondence of a point adapted to be anchored to the chassis of the vehicle and are connected, at their outer ends, by a shackle. In operation the lower leaf on being flexed contacts progressively, along its upper surface, with the top leaf in proportion to the magnitude of the load and according to a constant spring rate.

WO 97/36118 discloses a mechanical leaf spring suspension comprising two curved leafs rigidly joined together at one end of their ends in such a way that the surfaces of both touch each other at that end. The leafs length between the touching point and the points, where the compression force are to be applied, is identical for the two leafs. Also the curvature of each of the leafs has the same sign along the entire working length.

According to the conventional solution above described, the second spring rate is generated is predetermined by the geometry of the leaf spring and the counter leaf, and is therefore a fixed value. This means that the system is not versatile enough to suit the requirements of different vehicle loads and usages.

The purpose of this invention is to overcome the drawback described above with a variable stiffness mechanical leaf spring suspension, and a method for adjusting such stiffness, so that the stiffness of the suspension can be adjusted continuously according to the specific load and usage.

According to one aspect of this invention the variable stiffness mechanical leaf spring suspension comprises a main leaf equipped with the means for securing it to a vehicle, and a counter leaf that is attached to the main leaf at the leaf mid-point and is free at the ends. The variable stiffness mechanical leaf spring suspension also comprises a sliding mechanism that creates contact between portions of variable lengths of such main leaf and such counter leaf thus determining a continuous variation of the overall stiffness of the suspension.

The variable stiffness mechanical leaf spring suspension is **characterized in that** the sliding mechanism comprises an expandable pad mechanism that is inserted between the main leaf and the counter leaf and slides lengthwise between the leaves. The expandable pad mechanism creates contact between portions of variable lengths of the main leaf and the counter leaf. The sliding mechanism also comprises an actuator that is hinged at the leaf mid-point, connected to such expandable pad mechanism, and that causes the expandable pads to slide along the main leaf and the counter leaf.

In particular this invention relates to a variable stiffness mechanical leaf spring suspension, and a method for adjusting such stiffness, as described more fully in the claims, which are an integral part of this description.

The purposes and advantages of this invention will become clear from the following detailed description of a preferred embodiment (and the relative alternative forms of embodiment) and the drawings that are attached hereto, which are merely illustrative and not limitative, in which:
figure 1 is a diagram of a variable stiffness leaf spring according to this invention;
figures 2a and 2b illustrate two alternative embodiments of the expandable pad mechanism applied to the leaf spring;
figure 3 shows the load-deflection curve of the leaf spring according to this invention.

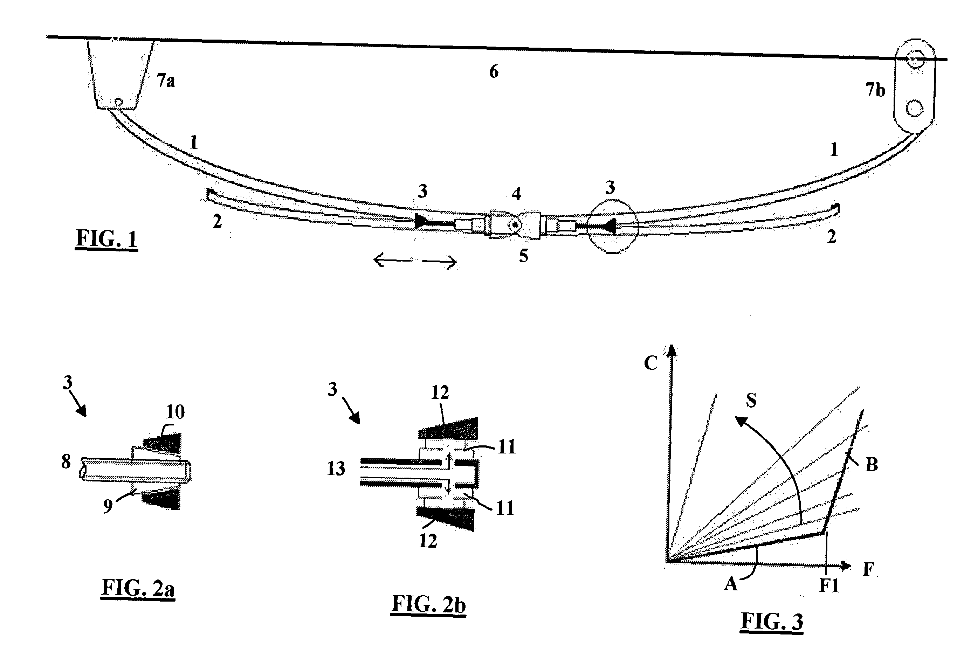

In fig.1 number 1 indicates a main leaf of a leaf spring, hinged at each end to the frame 6 of the vehicle by means of a fixed pin 7a and a conventional trunnion mounting 7b, used to compensate for the changes in the length of the leaf spring due to bending.

Number 2 indicates a counter leaf that is attached to the main leaf at the leaf mid-point 4 and is free at the ends, which are equipped with pads.

Between the main leaf 1 and the counter leaf 2 there is an expandable pad mechanism 3, that slides lengthwise between the leaves and is expandable in the vertical direction.

The purpose of the expandable pad mechanism 3 is to create contact between portions of variable lengths of such main leaf 1 and such counter leaf 2, thus determining a continuous variation of the overall stiffness of the suspension.

The expandable pad mechanism is connected to an actuator 5, that is hinged at the leaf mid-point 4, which causes the expandable pad mechanism to slide between the two leaves.

The actuator 5 is hinged at the leaf mid-point so that it can follow the movements of the suspension.

The expandable pad mechanism 3 may be implemented as illustrated in the two alternative embodiments in figures 2a and 2b.

The expandable pad mechanism 3 may be implemented as illustrated in the two alternative embodiments in figures 2a and 2b.

Figure 2a illustrates a rotating-translating mechanism, with a rotating-translating threaded shaft 8 that is screwed to a tapered threaded lead screw 9, which in turn engages against the pads 10, which are also tapered to complement the taper of the lead screw 9. The mechanism operates on the principle of the mechanical "mandrel" system: during translation the entire system comprising elements 8, 9 and 10 translates up to the point at which the main leaf 1 is to be placed in contact with the counter leaf 2; the shaft 8 then rotates and blocks the pads 10 on the two leaves, forcing them against the lead screw 9, so that the overall thickness of the lead screw-pad mechanism increases as the two tapered devices are set against one another.

The actuator 5 may comprise a first part, which is hinged at the leaf mid-point 4, comprising a hydraulic jack that drives the rotating-translating threaded shaft 8.

Figure 2b illustrates a system that comprises opposing hydraulic cylinders 11, that drive the pads 12 by means of a pressurized fluid circuit, in which the fluid flows through a hollow translating rod 13.

The mechanism operates on the principle of the hydraulic "jack" system: during translation the entire system comprising elements 11, 12 and 13 translates up to the point at which the main leaf 1 is to come into contact with the counter leaf 2; the pressurized fluid flows through the rod 13 and drives the cylinders 11, which block the pads 12 on the leaves, thus increasing the overall thickness of the system.

Also in this case the actuator 5 may comprise a first part, which is hinged at the leaf mid-point 4, comprising a hydraulic jack that drives the translating rod 13.

The stiffness of the leaf spring can be adjusted continuously as a function of the sliding of the pads, so that the horizontal "trim" and height of the vehicle can also be adjusted.

The adjustment can be performed manually or automatically, according to the desired inclination of the vehicle.

The adjustment can be effected by means of a conventional inclinometer (e.g. with variable resistor), or using an electronic brake force distribution system of the type currently used on vehicles that sends a position signal for the collar when it detects a deviation from the horizontal position.

The inclination can be adjusted to determine the height of the vehicle, for example to align the vehicle's loading-unloading platform with an external platform.

Figure 3 shows the load C / deflection F curve of the suspension as a function of the displacement S of the expandable pads. The condition in which there is no method of adjustment, as in the case of the conventional system, is shown by the thick broken line that comprises a first line A representing the spring rate of the main leaf up to a deflection value F1 at which the pads on the counter leaf touch the main leaf: for greater loads the line B is obtained from the sum of the contributions by both leaves.

With the introduction of the method of adjustment according to this invention, as a function of the displacement S of the collars 3, the line always intersects the origin and has a steeper inclination than the line A, up to a maximum value that is represented by a line that is parallel to the line B, running from softer points in the original position, to stiffer points.

The stiffness values can be adjusted within a range whereby the lowest stiffness value is determined by the minimum stiffness of the single main leaf, and the highest value is determined by the maximum stiffness of a conventional two-stage leaf spring, when the pads on the counter leaf are in contact with the main leaf.

It will be apparent to the person skilled in the art that other alternative and equivalent embodiments of the invention can be conceived and reduced to practice without departing from the true spirit of the invention.

The present invention achieves a number of advantages over the prior art.

Such advantages consist of the fact that the load-deflection curve of the suspension can be optimized according to the specific requirements, instead of using a compromise curve.

Furthermore, the number of alternative two-stage leaf springs can be reduced and a single type of leaf spring can be used for different applications.

Adjustments can be performed on a vehicle according to the specific load conditions.

From the description set forth above it will be possible for the person skilled in the art to embody the invention without introducing any further construction details.

## Claims

1. Variable stiffness mechanical leaf spring suspension, comprising:
- a main leaf (1) comprising means for securing the leaf spring to a vehicle;
- and a counter leaf (2) attached to the main leaf at the leaf mid-point (4) and free at the ends,
- a sliding mechanism (3, 5) that creates contact between portions of variable lengths of said main leaf (1) and counter leaf (2), in order to determine said variable stiffness with continuity,
**characterized in that** said sliding mechanism comprises:
- an expandable pad mechanism (3) that is inserted between the main leaf (1) and the counter leaf (2), which slides lengthwise between the leaves, wherein said expandable pad mechanism creates contact between portions of variable lengths of the main leaf and the counter leaf;
- an actuator (5) hinged at said leaf mid-point (4), connected to said expandable pad mechanism (3), that causes the expandable pad mechanism to slide along the main leaf and the counter leaf.

2. Mechanical suspension according to claim 1, **characterized in that** said expandable pad mechanism (3) comprises:
- a rotating-translating threaded shaft (8);
- a threaded lead screw (9) that is wedge-shaped and is screwed to said rotating-translating threaded shaft (8);
- first pads (10) that are wedge-shaped and complementary to said lead screw (9), that engage against said lead screw (9), so that the rotation of said rotating-translating threaded shaft (8) blocks said first pads (10) on the leaves and forces them against said threaded lead screw (9).

3. Mechanical suspension according to claim 1, **characterized in that** said expandable pad mechanism (3) comprises:
- opposed hydraulic cylinders (11);
- second pads (12) thrust by said opposed cylinders (11) against said leaves;
- a hollow translating mandrel (13) that carries pressurized fluid to said cylinders (11) to determine said thrust and block said second pads (12) on the leaves.

4. Mechanical suspension according to claim 1, **characterized in that** said actuator (5) comprises a hydraulic jack.

5. Mechanical suspension according to any of the previous claims, **characterized in that** said sliding mechanism (3, 5) is applied to both parts of the mechanical suspension, symmetrically in relation to said leaf mid-point (4).

6. Method for adjusting stiffness in a mechanical leaf spring suspension according to any of the previous claims, **characterized in that** it controls said sliding mechanism (3, 5) in order to create contact between portions of variable lengths of said main leaf (1) and counter leaf (2), to determine said continuous variation of stiffness.

7. Method according to claim 6, **characterized in that** said adjustments may be effected by means of an inclinometer, or an electronic brake force distribution system that, when it detects any deviation from the horizontal trim of the vehicle, sends a position signal for said sliding mechanism.

## Patentansprüche

1. Mechanische Blattfederaufhängung mit variabler Steifigkeit, umfassend:
ein Hauptblatt (1), das ein Mittel zum Sichern der Blattfeder an einem Fahrzeug umfasst,
und ein Gegenblatt (2), das an der Blattmitte (4) am Hauptblatt angebracht und an den Enden frei ist,
einen Gleitmechanismus (3, 5), der einen Kontakt zwischen Abschnitten mit variabler Länge des Hauptblattes (1) und des Gegenblattes (2) herstellt, um die variable Steifigkeit kontinuierlich festzulegen,
**dadurch gekennzeichnet, dass** der Gleitmechanismus umfasst:
einen expandierbaren Pad-Mechanismus (3), der zwischen das Hauptblatt (1) und das Gegenblatt (2) eingefügt ist, der längs zwischen den Blättern gleitet, wobei der expandierbare Pad-Mechanismus einen Kontakt zwischen Abschnitten mit variabler Länge des Hauptblattes und des Gegenblattes herstellt,
einen schwenkbar an der Blattmitte (4) angebrachten Betätiger (5), der mit dem expandierbaren Pad-Mechanismus (3) verbunden ist, der den expandierbaren Pad-Mechanismus entlang des Hauptblattes und des Gegenblattes gleiten lässt.

2. Mechanische Aufhängung gemäß Anspruch 1, **dadurch gekennzeichnet, dass** der expandierbare Pad-Mechanismus (3) umfasst:
eine Drehübersetzungs-Gewindewelle (8),
eine Gewinde-Leitspindel (9), die keilförmig ausgebildet ist und an die Drehübersetzungs-Gewindewelle (8) angeschraubt ist,
erste Pads (10), die keilförmig und komplementär zur Leitspindel (9) ausgebildet sind, und die gegen die Leitspindel (9) derart angreifen, dass die Drehung der Drehübersetzungs-Gewindewelle (8) die ersten Pads (10) an den Blättern blockiert und sie gegen die Gewinde-Leitspindel (9) schiebt.

3. Mechanische Aufhängung gemäß Anspruch 1, **dadurch gekennzeichnet, dass** der expandierbare Pad-Mechanismus (3) umfasst:
gegenüberliegende hydraulische Zylinder (11),
zweite Pads (12), die durch die gegenüberliegenden Zylinder (11) gegen die Blätter geschoben werden,
einen hohlen Übersetzungsdorn (13), der ein bedrucktes Fluid zu den Zylindern (11) trägt, um den Schub festzulegen und die zweiten Pads (12) an den Blättern zu blockieren.

4. Mechanische Aufhängung gemäß Anspruch 1, **dadurch gekennzeichnet, dass** der Betätiger (5) einen hydraulischen Heber umfasst.

5. Mechanische Aufhängung gemäß einem der vorangegangenen Ansprüche, **dadurch gekennzeichnet, dass** der Gleitmechanismus (3, 5) an beiden Teilen der mechanischen Aufhängung angebracht ist, und zwar symmetrisch in Bezug auf die Blattmitte (4).

6. Verfahren zum Einstellen einer Steifigkeit bei einer mechanischen Blattfederaufhängung gemäß einem der vorangegangenen Ansprüche, **dadurch gekennzeichnet, dass** es den Gleitmechanismus (3, 5) steuert, um einen Kontakt zwischen Abschnitten mit variabler Länge des Hauptblattes (1) und des Gegenblattes (2) herzustellen, um die kontinuierliche Variation der Steifigkeit festzulegen.

7. Verfahren gemäß Anspruch 6, **dadurch gekennzeichnet, dass** die Einstellungen mittels eines Neigungsmessers oder eines elektrischen Bremskraftverteilungssystems bewirkt werden können, der/das, wenn er/es eine Abweichung von einer horizontalen Lage des Fahrzeugs erfasst, ein Positionssignal für den Gleitmechanismus aussendet.

## Revendications

1. Suspension mécanique à ressort à lames à rigidité variable, comprenant :
- une lame principale (1) comprenant des moyens pour fixer le ressort à lames à un véhicule ;
- et une contre-lame (2) fixée à la lame principale au niveau du point milieu (4) des lames et libre aux extrémités,
- un mécanisme coulissant (3, 5) qui crée un contact entre les parties de longueurs variables desdites lame principale (1) et contre-lame (2), afin de déterminer ladite rigidité variable de manière continue,
**caractérisée en ce que** ledit mécanisme coulissant comprend :
- un mécanisme à patins (3) extensible qui est inséré entre la lame principale (1) et la contre-lame (2), qui coulisse dans le sens de la longueur entre les lames, dans laquelle ledit mécanisme à patins extensible crée un contact entre les parties de différentes longueurs de la lame principale et de la contre-lame ;
- un actionneur (5) articulé au niveau dudit point milieu (4) des lames, relié audit mécanisme à patins (3) extensible, qui amène le mécanisme à patins extensible à coulisser le long de la lame principale et de la contre-lame.

2. Suspension mécanique selon la revendication 1, **caractérisée en ce que** ledit mécanisme à patins (3) extensible comprend :
- un arbre fileté (8) rotatif-coulissant ;
- une vis-mère filetée (9) en forme de coin et qui est vissée sur ledit arbre fileté (8) rotatif-coulissant ;
- des premiers patins (10) en forme de coins et complémentaires de ladite vis-mère (9), qui viennent en prise contre ladite vis-mère (9), de sorte que la rotation dudit arbre fileté (8) rotatif-coulissant bloque lesdits premiers patins (10) sur les lames et les force contre ladite vis-mère (9) filetée.

3. Suspension mécanique selon la revendication 1, **caractérisée en ce que** ledit mécanisme à patins (3) extensible comprend :
- des vérins hydrauliques (11) opposés ;
- des deuxièmes patins (12) poussés par lesdits vérins (11) opposés contre lesdites lames ;
- un mandrin (13) coulissant creux qui transporte un fluide sous pression vers lesdits vérins (11) pour déterminer ladite poussée et bloquer lesdits deuxièmes patins (12) sur les lames.

4. Suspension mécanique selon la revendication 1, **caractérisée en ce que** ledit actionneur (5) comprend un cric hydraulique.

5. Suspension mécanique selon l'une quelconque des revendications précédentes, **caractérisée en ce que** ledit mécanisme coulissant (3, 5) est appliqué aux deux parties de la suspension mécanique, symétriquement par rapport audit point milieu (4) des lames.

6. Procédé d'ajustement de la rigidité dans une suspension mécanique à ressort à lames selon l'une quelconque des revendications précédentes, **caractérisé en ce qu'**il commande ledit mécanisme coulissant (3, 5) afin de créer un contact entre les parties de longueurs variables desdites lame principale (1) et contre-lame (2), pour déterminer ladite variation continue de la rigidité.

7. Procédé selon la revendication 6, **caractérisé en ce que** lesdits ajustements peuvent être effectués au moyen d'un inclinomètre, ou d'un système de répartition de force de freinage électronique qui, lorsqu'il détecte un écart par rapport à l'équilibrage horizontal du véhicule, envoie un signal de position pour ledit mécanisme coulissant.
